# EUROPEAN PATENT SPECIFICATION

(11) **EP 2 698 730 B1**
(45) Date of publication and mention of the grant of the patent: **13.06.2018**
(21) Application number: 12770887.3
(22) Date of filing: 06.04.2012
(51) Int. Cl.: H04L 29/08, G06F 17/30

(54) **DATA ACQUISITION METHOD, DEVICE AND SYSTEM**
DATENERFASSUNGSVERFAHREN, -VORRICHTUNG UND -SYSTEM
PROCÉDÉ, DISPOSITIF ET SYSTÈME D'ACQUISITION DE DONNÉES

(30) Priority: 15.04.2011 CN 201110095563
(43) Date of publication of application: 19.02.2014
(73) Proprietor: Tencent Technology (Shenzhen) Company Limited, Shenzhen, Guangdong 518044 (CN)
(72) Inventor: YUAN, Qing, Shenzhen Guangdong 518044 (CN)
(74) Representative: Elend, Almut Susanne
(86) International application number: PCT/CN2012/073584
(87) International publication number: WO 2012/139474

(56) References cited:
- CN-A- 1 395 708
- CN-A- 101 227 710
- CN-A- 101 378 532
- US-A1- 2001 051 927
- US-A1- 2008 034 056
- US-A1- 2009 234 913
- US-A1- 2010 318 632
- US-A1- 2011 087 647

## Description

### FIELD OF THE INVENTION

The present invention relates to the field of communications technologies, and in particular, to a data acquisition method, device and system.

### BACKGROUND OF THE INVENTION

In microblog systems, with the increase of the number of users and the amount of information posted by each of the users, the data generated in the systems explode sharply, such that mass data is formed. When a microblog user uses the microblog system, the user can acquire his or her desired data from the mass data stored in the system by using the way provided in the system such as by searching. How to present the mass data to the mass users quickly is a difficulty for the background technologies of the microblog system.

In the prior art, when a microblog information acquisition system receives a data acquisition request from a user, all data satisfying a data selection condition set by the user is selected and presented to the user. For example, microblog user A is followed by three other microblog users C, D, and F; when microblog user B requests information of those who follow microblog user A, the microblog information acquisition system firstly establishes a connection with a microblog information storage system to acquire information of user C, and upon receiving returned information of user C, establishes a connection with the microblog information storage system to acquire information of user D, and upon receiving returned information of user D, establishes a connection with a storage server to acquire information of user F. After information of users C, D, and F is completely acquired, the microlog information acquisition system returns the acquired information of users C, D, and F to user B.

Reference document 1 (US 2011/087647 A1) has disclosed a system and method for providing Web search results to a particular computer user based on the popularity of the search results with other computer users. One embodiment monitors, using one or more servers, at least one Web service for new actions of sharing of Web content by computer users; identifies, from the new actions of sharing of Web content by computer users, a data item that satisfies predetermined interestingness criteria; parses the data item to obtain at least one Uniform Resource Locator(URL); crawls at least one Web page corresponding to the at least one URL to obtain the content of the at least one Web page; analyzes the content of the at least one Web page; and updates an index based on the content of the at least one Web page, the index being usable in processing a Web search query from a particular user. Reference document 2 (US 2010/318632 A1) has disclosed a system for caching content and determining chunks of data that overlap a requested byte range. The system responds to a received request using the chunks stored in a cache. The system further makes requests to an origin server only for those chunks that a client has not previously requested.

The prior art has the following defect:
In conventional microblog systems, during processing of user data acquisition requests, the data desired has to be acquired on a one-by-one basis. To be specific, a piece of data can be acquired only after the previous piece of data has been acquired. This increases the waiting delay in acquisition of the overall data.

### SUMMARY OF THE INVENTION

To shorten the waiting delay of a user in data acquisition, an embodiment of the present invention provides a data acquisition method. The method includes, at a data acquisition device:
receiving at least one first data acquisition request, where the first data acquisition request carries a data selection condition;
acquiring all the data identifiers satisfying the data selection condition by querying in a locally stored mapping relationship between data selection conditions and data identifiers according to the data selection condition, the data identifiers being used to acquire the data corresponding thereto and being the physical storage position and reading manner of the data;
querying whether a locally cached mapping relationship between data identifies and data comprises the data corresponding to the data identifiers, and if true, acquiring the data corresponding to the data identifiers;
otherwise, generating at least one second data acquisition request according to the data identifiers and a preset packet format, wherein the second data acquisition request is used to request the data corresponding to the data identifiers, and carries a plurality of data identifiers, and the total number of bytes of the data identifiers is smaller than or equal to the maximum number of bytes allowed in the packet format; and
sending the at least one second data acquisition request to a data storage server, such that the data storage server acquires and returns the data corresponding to the data identifiers according to the data identifiers.

An embodiment of the present invention provides a data acquisition device. The device includes:
a data acquisition request receiving module, configured to receive at least one first data acquisition request, where the first data acquisition request carries a data selection condition;
a data identifier acquiring module, configured to acquire all the data identifiers satisfying the data selection condition by querying in a locally stored mapping relationship between data selection conditions and data identifiers according to the data selection condition, the data identifiers being used to acquire the data corresponding thereto and being the physical storage position and reading manner of the data; and
a first data acquiring module, configured to:
   query whether a locally cached mapping relationship between data identifies and data comprises the data corresponding to the data identifiers, and if true, acquire the data corresponding to the data identifiers; otherwise, generate at least one second data acquisition request according to the data identifiers and a preset packet format, wherein the second data acquisition request is used to request the data corresponding to the data identifiers, and carries a plurality of data identifiers, and the total number of bytes of the data identifiers is smaller than or equal to the maximum number of bytes allowed in the packet format; send the at least one second data acquisition request to the data storage server; and receive, from the data storage server, the data corresponding to the data identifiers according to the data identifiers.

An embodiment of the present invention provides a terminal. The terminal includes the above described data acquisition device.

An embodiment of the present invention provides a data storage server. The server includes:
a receiving module, configured to receive a second data acquisition request concurrently sent by a terminal, where the second data acquisition request is generated by the terminal according to data identifiers and a preset packet format;
an acquiring module, configured to acquire the data corresponding to the data identifiers according to the data identifiers; and
a returning module, configured to return the data corresponding to the data identifiers acquired by the acquiring module.

An embodiment of the present invention provides a data acquisition system. The system includes the terminal described above, and the data storage server described above.

According to the embodiments of the present invention, data identifiers are determined according to a data selection condition, and all the data corresponding to the data identifiers is concurrently acquired according to the data identifiers, thereby reducing a data feedback delay caused by successive acquisition of data in the prior art. Concurrent acquisition of the data improves data acquisition efficiency, such that the data is timely feedback to a user and user satisfaction of a data user is enhanced.

### BRIEF DESCRIPTION OF THE DRAWINGS

FIG. 1 is a flowchart of a data acquisition method according to Embodiment 1 of the present invention;
FIG. 2 is a flowchart of a data acquisition method according to Embodiment 2 of the present invention;
FIG. 3 is a flowchart of a data acquisition method according to Embodiment 3 of the present invention;
FIG. 4 is a schematic diagram of a data acquisition device according to Embodiment 4 of the present invention;
FIG. 5 is a schematic diagram of a data acquisition device according to Embodiment 5 of the present invention; and
FIG. 6 is a schematic diagram of a data storage server according to Embodiment 6 of the present invention.

### DETAILED DESCRIPTION OF THE INVENTION

To make the technical solutions and advantages of the present invention clearer, the embodiments of the present invention are described in detail below with reference to the accompanying drawings.

### Embodiment 1

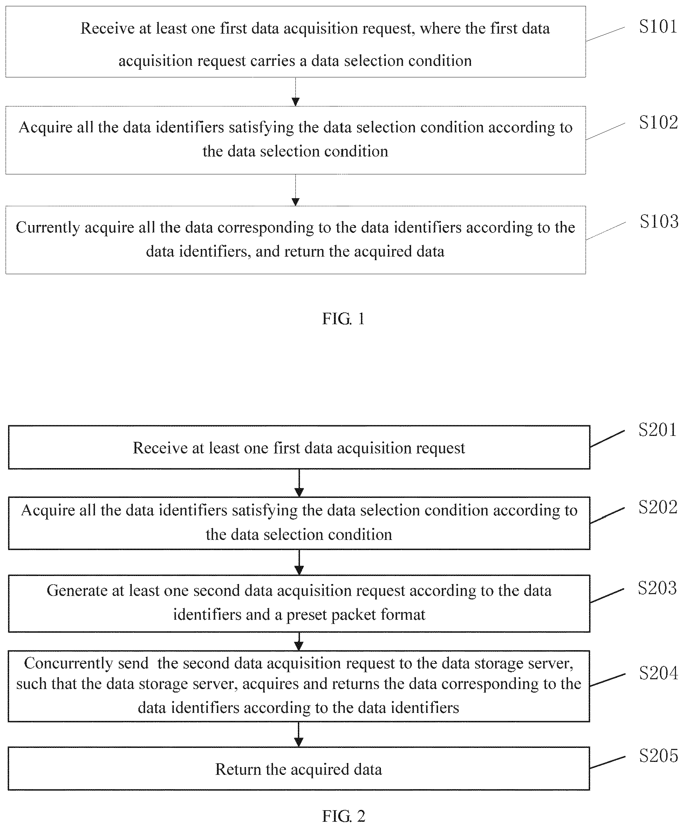

As illustrated in FIG. 1, this embodiment provides a data acquisition method. The method includes the following steps:
S101: receiving at least one first data acquisition request, where the first data acquisition request carries a data selection condition;
S102: acquiring all the data identifiers satisfying the data selection condition according to the data selection condition; and
S103: concurrently acquiring all the data corresponding to the data identifiers according to the data identifiers, and returning the acquired data.

It should be noted that the steps in this embodiment may be either performed by a server for acquiring data, or performed by other devices having the functions described in the steps in this embodiment, which is not limited in this embodiment.

According to the embodiments of the present invention, all data identifiers satisfying the data selection condition are acquired, and all the data corresponding to the data identifiers are concurrently acquired according to the data identifiers, thereby reducing a data feedback delay caused by successive acquisition of data in the prior art. Concurrent acquisition of the data improves data acquisition efficiency, such that the data is timely fed back to a user and user satisfaction is enhanced.

### Embodiment 2

As illustrated in FIG. 2, this embodiment provides a data acquisition method. The method includes the following steps:
S201: Receiving at least one first data acquisition request.

In this embodiment, a first data acquisition request is received within a preset duration, where one or a plurality of first data acquisition requests may be received, which is not limited in this embodiment. The first data acquisition request carries a data selection condition, and is used to request and acquire at least one piece of data satisfying the data selection condition. The preset duration may be 30 seconds, 60 seconds, or 90 seconds, which is not limited in this embodiment.

For example, using a microblog system as an example, when microblog user A is followed by three other microblog users, and microblog user B can acquire, by sending a first data acquisition request, information of the microblog users who follow microblog user A, then the data selection condition carried in the first data acquisition request is "those who follow user A"; within a preset duration, microblog user L also sends a first data acquisition request to acquire information of the microblog users who follow microblog user A, then the data selection condition carried in the first data acquisition request is also "those who follow user A". Assuredly, within the preset duration, other microblog users may also send a first data acquisition request to acquire information of the microblog users who follow microblog user A, which is not limited in this embodiment.

S202: Acquiring all the data identifiers satisfying the data selection condition according to the data selection condition.

In this embodiment, a mapping relationship between data selection conditions and data identifiers is pre-stored locally. In this way, when the first data acquisition request is received, the data identifiers corresponding to the data selection condition are acquired by querying in the locally stored mapping relationship between data selection conditions and data identifiers. The data identifier is used to acquire the data corresponding thereto. Optionally, when the data is physical data, the data identifier thereof may be the physical storage position and reading manner of the physical data.

For example, the locally stored mapping relationship between data selection conditions and data identifiers is listed in Table 1. When the data selection condition is "those who follow user A" as described in step S201, the data identifiers corresponding to the data selection condition are C1, D1, and F1.

**Table 1**

| Data Acquisition Condition | Data Identifier |
|---|---|
| Those who follow user A | C1 |
| | D1 |
| | F1 |
| Those who follow user M | W1 |
| | Y1 |
| | Z1 |

Optionally, when at least two first data acquisition requests are received within the preset duration, all the data identifiers satisfying the data selection conditions may be combined to acquire combined data identifiers. The combined data identifiers include no identical data identifiers. Additionally, the combined data identifiers are used as data identifiers in the subsequent steps.

For example, if the preset duration is 1 minute, two first data acquisition requests are received within the 1 minute, and the data identifiers corresponding to the data selection conditions carried in the two data acquisition requests are "C1, D1, and F1" and "C1 and D1" respectively, then the combined data identifiers are C1, D1, and F1.

S203: Generating at least one second data acquisition request according to the data identifiers and a preset packet format.

In this embodiment, the second data acquisition request carries at least one data identifier, where the total number of bytes of the data identifiers is smaller than or equal to the maximum number of bytes allowed in the packet format. The preset packet format may be any packet format for data transmission corresponding to existing communication protocols, for example, a packet format corresponding to User Datagram Protocol (UDP) or Transmission Control Protocol (TCP).

For example, as described in step S202, when the preset packet format is a packet format corresponding to UDP, and the acquired data identifiers corresponding to the data selection condition "those who follow user A" are C1, D1, and F1, the second data acquisition request generated according to the data identifiers and the preset packet format is a UDP packet carrying the data identifiers C1, D1 and F1.

Furthermore and optionally, the preset packet format may be determined according to the communication protocol employed for communication between a server and a data storage server. Preferably, UDP may also be employed. Furthermore and preferably, when the second data acquisition request is generated according to the preset packet format, and one packet is unable to contain all data identifiers, then the number of stored bytes of the data identifiers are uniformly divided according to the maximum number of bytes allowed in the packet format, and thus all the data identifiers are sent over a plurality of packets. In addition, the server may negotiate with the data storage server, and the background returns the requested amount of data for each request. For example, assume that a celebrity has 10 thousand fans in the microblog system, a microblog user requests all the celebrity's fans, and the server communicates with the data storage server over UDP; since each UDP packet is able to contain a maximum of 500 data identifiers, 20 data acquisition requests may be concurrently sent to the data storage server. The data request start positions are respectively the 0^{th} data identifier, the 500^{th} data identifier, the 1000^{th} data identifier, ..., the 9500^{th} data identifier. Upon receipt of the data requests, the data storage server concurrently processes the requests and returns the data.

In this embodiment, when, in step S201, at least two first data acquisition requests are received within the preset duration, at least one second data acquisition request is generated according to the combined data identifiers and the preset packet format. The specific process of generating the second data acquisition request is similar to the above-described process, which is not described herein any further.

S204: Concurrently sending the second data acquisition request to the data storage server, such that the data storage server acquires and returns the data corresponding to the data identifiers according to the data identifiers.

In this embodiment, the second data acquisition request is concurrently sent to the data storage server such that the data storage server queries the locally stored mapping relationship between data identifiers and data; and the data storage server acquires the data corresponding to the data identifiers and returns the acquired data.

For example, the locally stored mapping relationship between data identifiers and data is listed in Table 2. As described in step S203, when the packet received by the data storage server is a UDP packet carrying the data identifiers C1, D1, and F1, the data storage server queries in Table 2 to acquire the data 101, 111, and 110 corresponding to C1, D1, and F1, and returns the acquired data 101, 111, and 110. In this embodiment, the data may be stored in a plurality of manners, which is not limited in this embodiment.

**Table 2**

| Data Identifier | Data (may be stored in a plurality of manners) |
|---|---|
| C1 | 101 |
| D1 | 111 |
| F1 | 110 |
| ...... | ...... |

S205: Returning the acquired data.

In this embodiment, the subject for performing the steps converts the acquired data into a data format that can be displayed on the terminal, and sends the same to the user.

Optionally, it is judged whether the acquired data satisfies a preset cache condition, and if true, a mapping relationship between the data identifiers and the data is generated, and the mapping relationship is cached in the locally stored mapping relationship between data identifiers and data. The operation is optional, which may not be performed in practice.

Furthermore and optionally, a validity period may be set for storage of the mapping relationship between the data identifiers and the data in the locally stored mapping relationship between data identifiers and data; if a duration when the mapping relationship between the data identifiers and the data is locally cached exceeds the validity period, the mapping relationship between the data identifiers and the data is deleted from the locally cached mapping relationship between data identifiers and data.

For example, the locally stored mapping relationship between data identifiers and data is listed in Table 3, and the validity period of the mapping relationship may further lists.

**Table 3**

| Data Selection Condition | Data | Validity Period |
|---|---|---|
| C1 | 101 | 5 minutes |
| D1 | 111 | |
| F1 | 110 | |
| Those who concern for user C | 1110 | 10 minutes |
| ...... | ...... | 5 minutes |

According to the embodiments of the present invention, data identifiers are determined according to a data selection condition, and all the data corresponding to the data identifiers is concurrently acquired according to the data identifiers, thereby reducing a data feedback delay caused by successive acquisition of data in the prior art. Concurrent acquisition of the data improves data acquisition efficiency, such that the data is timely feedback to a user and user satisfaction of a data user is enhanced.

### Embodiment 3

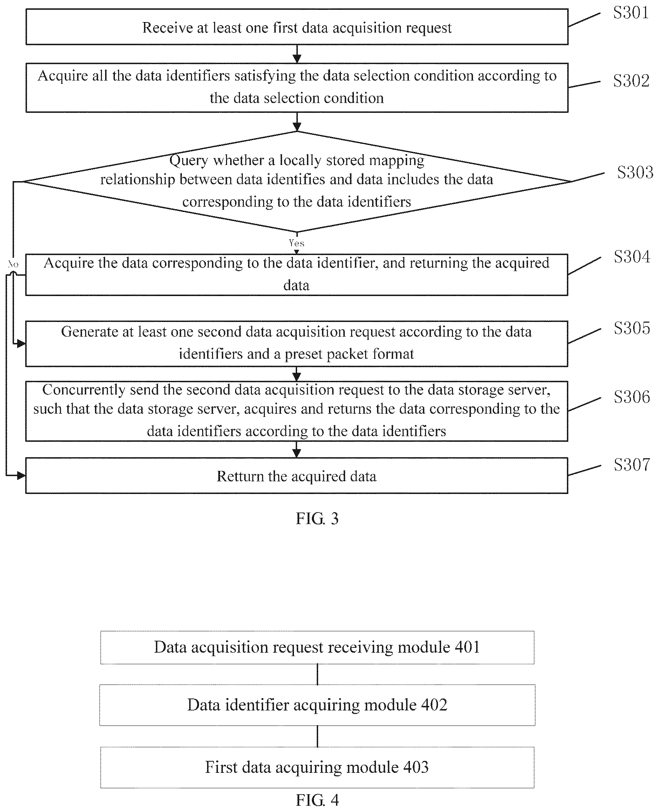

As illustrated in FIG. 3, this embodiment provides a data acquisition method. The method includes steps S301-S307, where steps S301-S302 are similar to steps S201-S202 in Embodiment 2, and steps S305-S307 are similar to steps S203-S205 in Embodiment 2, which are not described herein any further. Unlike Embodiment 2, this embodiment further includes the following steps:
S303: querying whether a locally stored mapping relationship between data identifies and data includes the data corresponding to the data identifiers, and if true, performing step S304, and otherwise, performing step S305; and
S304: acquiring the data corresponding to the data identifier, and returning the acquired data.

For example, when the received second data acquisition request carries data identifiers C1, D1, and F1, as described in step S202, corresponding to the data selection condition. Table 3 is queried to acquire the data 101, 111, and 110 corresponding to the data identifiers C1, D1, and F1, and the acquired data is returned.

According to the embodiments of the present invention, data identifiers are determined according to a data selection condition, and all the data corresponding to the data identifiers is concurrently acquired according to the data identifiers, thereby reducing a data feedback delay caused by successive acquisition of data in the prior art. Concurrent acquisition of the data improves data acquisition efficiency, such that the data is timely feedback to a user and user satisfaction of a data user is enhanced. Furthermore, according to the embodiments of the present invention, the acquired data is cached such that when a user needs to acquire the data again, the user does not need to acquire the data from the background, but acquires the data in the local cache. This reduces the time for acquiring the data, and enhances user experience.

### Embodiment 4

As illustrated in FIG. 4, this embodiment provides a data acquisition device. The device includes:
a data acquisition request receiving module 401, configured to receive at least one first data acquisition request, where the first data acquisition request carries a data selection condition;
a data identifier acquiring module 402, configured to acquire all the data identifiers satisfying the data selection condition according to the data selection condition; and
a first data acquiring module 403, configured to concurrently acquire all the data corresponding to the data identifiers according to the data identifiers, and return the acquired data.

An embodiment of the present invention provides a terminal. The terminal includes the above described data acquisition device.

According to the embodiments of the present invention, all data identifiers satisfying the data selection condition are acquired, and all the data corresponding to the data identifiers are concurrently acquired according to the data identifiers, thereby reducing a data feedback delay caused by successive acquisition of data in the prior art. Concurrent acquisition of the data improves data acquisition efficiency, such that the data is timely fed back to a user and user satisfaction of a data user is enhanced.

### Embodiment 5

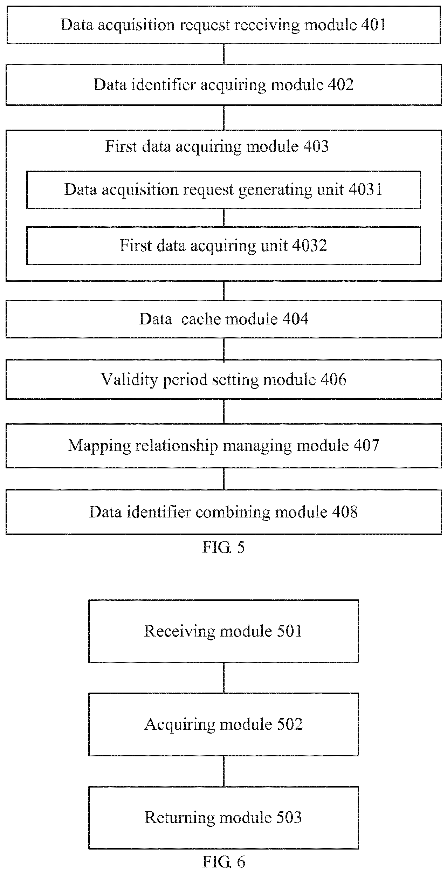

As illustrated in FIG. 5, this embodiment provides a data acquisition device. Similar to Embodiment 4, the device includes: the data acquisition request receiving module 401, the data identifier acquiring module 402, and the first data acquiring module 403 described in Embodiment 4.

Preferably, the first data acquiring module 403 specifically includes:
a data acquisition request generating unit 4031, configured to generate at least one second data acquisition request according to the data identifiers and a preset packet format, where the second data acquisition request is used to request the data corresponding to the data identifiers, and carries at least one data identifier, and the total number of bytes of the data identifiers is smaller than or equal to the maximum number of bytes allowed in the packet format; and
a first data acquiring unit 4032, configured to concurrently send the second data acquisition request to the data storage server, such that the data storage server acquires and returns the data corresponding to the data identifiers according to the data identifiers.

Optionally, the first data acquiring module is specifically configured to:
query whether a locally cached mapping relationship between data identifies and data includes the data corresponding to the data identifiers, and if true, acquire the data corresponding to the data identifiers; otherwise, generate at least one second data acquisition request according to the data identifiers and a preset packet format, where the second data acquisition request is used to request the data corresponding to the data identifiers, and carries at least one data identifier, and the total number of bytes of the data identifiers is smaller than or equal to the maximum number of bytes allowed in the packet format; and concurrently send the second data acquisition request to the data storage server, such that the data storage server, acquires and returns the data corresponding to the data identifiers according to the data identifiers.

Optionally, the device further includes:
a data cache module 404, configured to: judge whether the acquired data satisfies a preset cache condition; and if true, generate a mapping relationship between the data identifiers and the data, and cache the mapping relationship in the locally cached mapping relationship between data identifiers and data;
a validity period setting module 406, configured to set a validity period for the mapping relationship between the data identifiers and the data;
a mapping relationship managing module 407, configured to: if a duration when the mapping relationship between the data identifiers and the data is locally cached exceeds the validity period, delete the mapping relationship between the data identifiers and the data from the locally cached mapping relationship between data identifiers and data; and
a data identifier combining module 408, configured to combine all the data identifiers satisfying the data selection condition to obtain combined data identifiers, where the combined data identifiers include no identical data identifiers.

The first data acquiring module 403 is further configured to: concurrently acquire all the data corresponding to the combined data identifiers according to the combined data identifiers, and return the acquired data.

An embodiment of the present invention provides a terminal. The terminal includes the above described data acquisition device.

According to the embodiments of the present invention, data identifiers are determined according to a data selection condition, and all the data corresponding to the data identifiers is concurrently acquired according to the data identifiers, thereby reducing a data feedback delay caused by successive acquisition of data in the prior art. Concurrent acquisition of the data improves data acquisition efficiency, such that the data is timely feedback to a user and user experience in data acquisition is enhanced. Furthermore, according to the embodiments of the present invention, the acquired data is cached such that when a user needs to acquire the data again, the user does not need to acquire the data from the background, but acquires the data in the local cache. This reduces the time for acquiring the data, and enhances user experience.

### Embodiment 6

As illustrated in FIG. 6, this embodiment provides a data storage server, including: a receiving module 501, an acquiring module 502, and a returning module 503.

The receiving module 501 is configured to receive a second data acquisition request concurrently sent by a terminal, where the second data acquisition request is generated by the terminal according to data identifiers and a preset packet format.

The acquiring module 502 is configured to acquire the data corresponding to the data identifiers according to the data identifiers.

The returning module 503 is configured to return the data corresponding to the data identifiers acquired by the acquiring module 502.

Preferably, the acquiring module 502 is specifically configured to:
query in a mapping relationship between data identifies and data stored on a data storage server to acquire data corresponding to the data identifier of the generated second data acquisition request.

According to the embodiments of the present invention, a second data acquisition request that is concurrently sent by a terminal is received, and all data corresponding to the data identifiers are concurrently acquired according to the data identifiers, thereby reducing a data feedback delay caused by successive acquisition of data in the prior art. Concurrent acquisition of the data improves data acquisition efficiency, such that the data is timely fed back to a user and user experience in data acquisition is enhanced.

### Embodiment 7

This embodiment provides a data acquisition system. The system includes the terminal described in Embodiment 4 or 5, and the data storage server described in Embodiment 6.

According to the embodiments of the present invention, data identifiers are determined according to a data selection condition, and all the data corresponding to the data identifiers is concurrently acquired according to the data identifiers, thereby reducing a data feedback delay caused by successive acquisition of data in the prior art. Concurrent acquisition of the data improves data acquisition efficiency, such that the data is timely fed back to a user and user satisfaction of a data user is enhanced.

The device, terminal, data storage server, and system provided in this embodiment are based on the same inventive concept as the method embodiments. Therefore, the detailed implementation can refer to the description of the method embodiments of the present invention, which is not described herein any further.

All or part of the steps disclosed in the technical solutions according to the embodiments can be implemented by software programming. The programs may be stored in a computer readable storage medium, such as a read only memory (ROM), random access memory (RAM), a magnetic disk, or a compact disc-read only memory (CD-ROM).

Described above are merely preferred embodiments of the present invention, but are not intended to limit the present invention, which is defined by the claims.

## Claims

1. A data acquisition method, at a data acquisition device, comprising:
receiving at least one first data acquisition request, wherein the first data acquisition request carries a data selection condition (S201);
acquiring all the data identifiers satisfying the data selection condition by querying in a locally stored mapping relationship between data selection conditions and data identifiers according to the data selection condition (S202), the data identifiers being used to acquire the data corresponding thereto and being the physical storage position and reading manner of the data;
querying whether a locally cached mapping relationship between data identifies and data comprises the data corresponding to the data identifiers, and if true, acquiring the data corresponding to the data identifiers (S303);
otherwise, generating at least one second data acquisition request according to the data identifiers and a preset packet format (S203), wherein the second data acquisition request is used to request the data corresponding to the data identifiers, and carries a plurality of data identifiers, and the total number of bytes of the data identifiers is smaller than or equal to the maximum number of bytes allowed in the packet format; and
sending the at least one second data acquisition request to a data storage server, such that the data storage server acquires and returns the data corresponding to the data identifiers according to the data identifiers (S204).

2. The method according to claim 1, wherein after sending the at least one second data acquisition request to the data storage server, such that the data storage server acquires and returns the data corresponding to the data identifiers according to the data identifiers, the method further comprises:
judging whether the acquired data satisfies a preset cache condition, and if true, generating a mapping relationship between the data identifiers and the data, and caching the mapping relationship in the locally cached mapping relationship between data identifiers and data.

3. The method according to claim 2, wherein after the judging whether the acquired data satisfies a preset cache condition, and if true, generating a mapping relationship between the data identifiers and the data, and caching the mapping relationship in the locally cached mapping relationship between data identifiers and data, the method further comprises:
setting a validity period for the mapping relationship between the data identifiers and the data; and
if a duration when the mapping relationship between the data identifiers and the data is locally cached exceeds the validity period, deleting the mapping relationship between the data identifiers and the data from the locally cached mapping relationship between data identifiers and data.

4. The method according to claim 1, wherein when at least two first data acquisition requests are received within a preset duration, after the acquiring all the data identifiers satisfying the data selection condition according to the data selection condition, the method further comprises:
combining all the data identifiers satisfying the data selection conditions to obtain combined data identifiers, wherein the combined data identifiers comprise no identical data identifiers; and
the concurrently acquiring all the data corresponding to the data identifiers according to the data identifiers, and returning the acquired data comprises:
concurrently acquiring all the data corresponding to the combined data identifiers according to the combined data identifiers, and returning the acquired data.

5. A data acquisition device, comprising:
a data acquisition request receiving module (401), configured to receive at least one first data acquisition request, wherein the first data acquisition request carries a data selection condition;
a data identifier acquiring module (402), configured to acquire all the data identifiers satisfying the data selection condition by querying in a locally stored mapping relationship between data selection conditions and data identifiers according to the data selection condition, the data identifiers being used to acquire the data corresponding thereto and being the physical storage position and reading manner of the data; and
a first data acquiring module (403), configured to:
query whether a locally cached mapping relationship between data identifies and data comprises the data corresponding to the data identifiers, and if true, acquire the data corresponding to the data identifiers; otherwise, generate at least one second data acquisition request according to the data identifiers and a preset packet format, wherein the second data acquisition request is used to request the data corresponding to the data identifiers, and carries a plurality of data identifiers, and the total number of bytes of the data identifiers is smaller than or equal to the maximum number of bytes allowed in the packet format; send the at least one second data acquisition request to a data storage server; and receive, from the data storage server, the data corresponding to the data identifiers according to the data identifiers.

6. The device according to claim 5, further comprising:
a data cache module (404), configured to: judge whether the acquired data satisfies a preset cache condition; and if true, generate a mapping relationship between the data identifiers and the data, and cache the mapping relationship in the locally cached mapping relationship between data identifiers and data.

7. The device according to claim 6, further comprising:
a validity period setting module (406), configured to set a validity period for the mapping relationship between the data identifiers and the data; and
a mapping relationship managing module (407), configured to: if a duration when the mapping relationship between the data identifiers and the data is locally cached exceeds the validity period, delete the mapping relationship between the data identifiers and the data from the locally cached mapping relationship between data identifiers and data.

8. The device according to claim 5, further comprising:
a data identifier combining module (408), configured to combine all the data identifiers satisfying the data selection conditions to obtain combined data identifiers, wherein the combined data identifiers comprise no identical data identifiers;
wherein the first data acquiring module (403) is further configured to: concurrently acquire all the data corresponding to the combined data identifiers according to the combined data identifiers, and return the acquired data.

9. A terminal, comprising a data acquisition device according to any one of claims 5 to 8.

10. A data acquisition system, comprising a terminal according to claim 9 and a data storage server which comprises:
a receiving module, configured to receive a second data acquisition request sent by a terminal, wherein the second data acquisition request is generated by the terminal according to data identifiers and a preset packet format;
an acquiring module, configured to acquire the data corresponding to the data identifiers according to the data identifiers; and
a returning module, configured to return the data corresponding to the data identifiers acquired by the acquiring module.

11. The system according to claim 10, wherein the acquiring module is specifically configured to:
querying in a mapping relationship between data identifies and data stored on the data storage server to acquire data corresponding to the data identifier of the generated second data acquisition request.

## Patentansprüche

1. Datenerfassungsverfahren an einer Datenerfassungsvorrichtung, das aufweist:
Empfangen von wenigstens einer ersten Datenerfassungsanforderung, wobei die erste Datenerfassungsanforderung eine Datenauswahlbedingung trägt, (S201);
Erfassen aller die Datenauswahlbedingung erfüllenden Datenkennungen durch Abfragen in einer lokal gespeicherten Zuordnungsbeziehung zwischen Datenauswahlbedingungen und Datenkennungen gemäß der Datenauswahlbedingung (S202), wobei die Datenkennungen zum Erfassen der diesen entsprechenden Daten verwendet werden und die physikalische Speicherposition und Leseweise der Daten sind;
Abfragen, ob eine lokal gecachte Zuordnungsbeziehung zwischen Datenkennungen und Daten die den Datenkennungen entsprechenden Daten aufweist, und, wenn wahr, Erfassen der den Datenkennungen entsprechenden Daten (S303);
ansonsten Generieren von wenigstens einer zweiten Datenerfassungsanforderung gemäß den Datenkennungen und einem vorgegebenen Paketformat (S203), wobei die zweite Datenerfassungsanforderung zum Anfordern der den Datenkennungen entsprechenden Daten verwendet wird und eine Vielzahl von Datenkennungen trägt, und die Gesamtzahl von Bytes der Datenkennungen kleiner oder gleich der maximalen Anzahl von in dem Paketformat erlaubten Bytes ist; und
Senden der wenigstens einen zweiten Datenerfassungsanforderung an einen Datenspeicherserver, so dass der Datenspeicherserver die den Datenkennungen entsprechenden Daten gemäß den Datenkennungen erfasst und zurücksendet (S204).

2. Verfahren nach Anspruch 1, wobei nach dem Senden der wenigstens einen zweiten Datenerfassungsanforderung an den Datenspeicherserver, so dass der Datenspeicherserver die den Datenkennungen entsprechenden Daten gemäß den Datenkennungen erfasst und zurücksendet, das Verfahren ferner aufweist:
Urteilen, ob die erfassten Daten eine vorgegebene Cache-Bedingung erfüllen, und, wenn wahr, Generieren einer Zuordnungsbeziehung zwischen den Datenkennungen und den Daten und Cachen der Zuordnungsbeziehung in der lokal gecachten Zuordnungsbeziehung zwischen Datenkennungen und Daten.

3. Verfahren nach Anspruch 2, wobei nach dem Urteilen, ob die erfassten Daten eine vorgegebene Cache-Bedingung erfüllen, und, wenn wahr, Generieren einer Zuordnungsbeziehung zwischen den Datenkennungen und den Daten und Cachen der Zuordnungsbeziehung in der lokal gecachten Zuordnungsbeziehung zwischen Datenkennungen und Daten, das Verfahren ferner aufweist:
Festsetzen einer Gültigkeitsperiode für die Zuordnungsbeziehung zwischen den Datenkennungen und den Daten und,
falls eine Dauer, in der die Zuordnungsbeziehung zwischen den Datenkennungen und den Daten lokal gecacht wird, die Gültigkeitsperiode überschreitet, Löschen der Zuordnungsbeziehung zwischen den Datenkennungen und den Daten aus der lokal gecachten Zuordnungsbeziehung zwischen Datenkennungen und Daten.

4. Verfahren nach Anspruch 1, wobei, wenn innerhalb einer vorgegebenen Dauer wenigstens zwei erste Datenerfassungsanforderungen empfangen werden, nach dem Erfassen aller die Datenauswahlbedingung erfüllenden Datenkennungen gemäß der Datenauswahlbedingung das Verfahren ferner aufweist:
Kombinieren aller die Datenauswahlbedingungen erfüllenden Datenkennungen zu kombinierten Datenkennungen, wobei die kombinierten Datenkennungen keine identischen Datenkennungen aufweisen; und
das gleichzeitige Erfassen aller den Datenkennungen entsprechenden Daten gemäß den Datenkennungen und Zurücksenden der erfassten Daten aufweist:
gleichzeitiges Erfassen aller den kombinierten Datenkennungen entsprechenden Daten gemäß den kombinierten Datenkennungen und Zurücksenden der erfassten Daten.

5. Datenerfassungsvorrichtung, die aufweist:
ein Datenerfassungsanforderungsempfangsmodul (401), das zum Empfangen von wenigstens einer ersten Datenerfassungsanforderung konfiguriert ist, wobei die erste Datenerfassungsanforderung eine Datenauswahlbedingung trägt;
ein Datenkennungserfassungsmodul (402), das zum Erfassen aller die Datenauswahlbedingung erfüllenden Datenkennungen durch Abfragen in einer lokal gespeicherten Zuordnungsbeziehung zwischen Datenauswahlbedingungen und Datenkennungen gemäß der Datenauswahlbedingung konfiguriert ist, wobei die Datenkennungen zum Erfassen der diesen entsprechenden Daten verwendet werden und die physikalische Speicherposition und Leseweise der Daten sind; und
ein erstes Datenerfassungsmodul (403), das konfiguriert ist zum:
Abfragen, ob eine lokal gecachte Zuordnungsbeziehung zwischen Datenkennungen und Daten die den Datenkennungen entsprechenden Daten aufweist, und, wenn wahr, Erfassen der den Datenkennungen entsprechenden Daten; ansonsten Generieren von wenigstens einer zweiten Datenerfassungsanforderung gemäß den Datenkennungen und einem vorgegebenen Paketformat, wobei die zweite Datenerfassungsanforderung zum Anfordern der den Datenkennungen entsprechenden Daten verwendet wird und eine Vielzahl von Datenkennungen trägt, und die Gesamtzahl von Bytes der Datenkennungen kleiner oder gleich der maximalen Anzahl von in dem Paketformat erlaubten Bytes ist; und Senden der wenigstens einen zweiten Datenerfassungsanforderung an einen Datenspeicherserver und Empfangen der den Datenkennungen entsprechenden Daten gemäß den Datenkennungen vom Datenspeicherserver.

6. Vorrichtung nach Anspruch 5, die ferner aufweist:
ein Daten-Cache-Modul (404), das konfiguriert ist zum: Urteilen, ob die erfassten Daten eine vorgegebene Cache-Bedingung erfüllen, und, wenn wahr, Generieren einer Zuordnungsbeziehung zwischen den Datenkennungen und den Daten und Cachen der Zuordnungsbeziehung in der lokal gecachten Zuordnungsbeziehung zwischen Datenkennungen und Daten.

7. Vorrichtung nach Anspruch 6, die ferner aufweist:
ein Gültigkeitsperiodenfestsetzmodul (406), das zum Festsetzen einer Gültigkeitsperiode für die Zuordnungsbeziehung zwischen den Datenkennungen und den Daten konfiguriert ist, und
ein Zuordnungsbeziehungsverwaltungsmodul (407), das konfiguriert ist zum: falls eine Dauer, in der die Zuordnungsbeziehung zwischen den Datenkennungen und den Daten lokal gecacht wird, die Gültigkeitsperiode überschreitet, Löschen der Zuordnungsbeziehung zwischen den Datenkennungen und den Daten aus der lokal gecachten Zuordnungsbeziehung zwischen Datenkennungen und Daten.

8. Vorrichtung nach Anspruch 5, die ferner aufweist:
ein Datenkennungskombiniermodul (408), das zum Kombinieren aller die Datenauswahlbedingungen erfüllenden Datenkennungen zu kombinierten Datenkennungen konfiguriert ist, wobei die kombinierten Datenkennungen keine identischen Datenkennungen aufweisen; und
wobei das erste Datenerfassungsmodul (403) ferner konfiguriert ist zum: gleichzeitigen Erfassen aller den kombinierten Datenkennungen entsprechenden Daten gemäß den kombinierten Datenkennungen und Zurücksenden der erfassten Daten.

9. Endgerät, das eine Datenerfassungsvorrichtung nach einem der Ansprüche 5 bis 8 aufweist.

10. Datenerfassungssystem, die ein Endgerät nach Anspruch 9 und einen Datenspeicherserver aufweist, der aufweist:
ein Empfangsmodul, das zum Empfangen einer von einem Endgerät gesendeten zweiten Datenerfassungsanforderung konfiguriert ist, wobei die zweite Datenerfassungsanforderung durch das Endgerät gemäß Datenkennungen und einem vorgegebenen Paketformat generiert wird;
ein Erfassungsmodul, das zum Erfassen der den Datenkennungen entsprechenden Daten gemäß den Datenkennungen konfiguriert ist; und
ein Rücksendungsmodul, das zum Zurücksenden der den durch das Erfassungsmodul erfassten Datenkennungen entsprechenden Daten konfiguriert ist.

11. System nach Anspruch 10, wobei das Erfassungsmodul speziell konfiguriert ist zum:
Abfragen in einer Zuordnungsbeziehung zwischen Datenkennungen und im Datenspeicherserver gespeicherten Daten zum Erfassen von der Datenkennung der generierten zweiten Datenerfassungsanforderung entsprechenden Daten.

## Revendications

1. Procédé d'acquisition de données, dans un dispositif d'acquisition de données, comprenant :
la réception d'au moins une première demande d'acquisition de données, cette première demande d'acquisition de données acheminant une condition de sélection de données (S201) ;
l'acquisition de tous les identificateurs de données satisfaisant la condition de sélection de données en interrogeant dans un rapport de mise en correspondance stocké localement entre des conditions de sélection de données et des identificateurs de données en fonction de la condition de sélection de données (S202), ces identificateurs de données étant utilisés pour acquérir les données correspondant à eux et étant la position de stockage physique et la manière de lecture des données ;
l'interrogation de si un rapport de mise en correspondance antémémorisé localement entre les identificateurs de données et les données comprend les données correspondant aux identificateurs de données, et, si c'est le cas, l'acquisition des données correspondant aux identificateurs de données (S303) ;
sinon, la génération d'au moins une deuxième demande d'acquisition de données en fonction des identificateurs de données et d'un format de paquet préréglé (S203), cette deuxième demande d'acquisition de données étant utilisée pour demander les données correspondant aux identificateurs de données, et acheminant une pluralité d'identificateurs de données, et le nombre total d'octets des identificateurs de données étant plus petit que le nombre maximum d'octets permis dans la format de paquet ou ou égal à celui-ci ; et
l'envoi de l'au moins une deuxième demande d'acquisition de données à un serveur de stockage de données, de manière à ce que ce serveur de stockage de données acquière et renvoie les données correspondant aux identificateurs de données en fonction des identificateurs de données (S204).

2. Procédé selon la revendication 1, ce procédé comprenant en outre, après l'envoi de l'au moins une deuxième demande d'acquisition de données au serveur de stockage de données, de manière à ce que le serveur de stockage de données acquière et renvoie les données correspondant aux identificateurs de données en fonction des identificateurs de données :
le jugement de si les données acquises satisfont une condition d'antémémoire prédéfinie et, si c'est le cas, la génération d'un rapport de mise en correspondance entre les identificateurs de données et les données, et l'antémémorisation de ce rapport de mise en correspondance dans le rapport de mise en correspondance antémémorisé localement entre les identificateurs de données et les données.

3. Procédé selon la revendication 2, ce procédé comprenant en outre, après le jugement de si les données acquises satisfont une condition d'antémémorisation prédéfinie et, si c'est le cas, la génération d'un rapport de mise en correspondance entre les identificateurs de données et les données, et l'antémémorisation de ce rapport de mise en correspondance dans le rapport de mise en correspondance antémémorisé localement entre les identificateurs de données et les données :
la définition d'une période de validité pour le rapport de mise en correspondance entre les identificateurs de données et les données ; et
si une durée pendant laquelle le rapport de mise en correspondance entre les identificateurs de données et les données est antémémorisé localement dépasse la période de validité, la suppression du rapport de mise en correspondance entre les identificateurs de données et les données du rapport de mise en correspondance antémémorisé localement entre les identificateurs de données et les données.

4. Procédé selon la revendication 1, ce procédé comprenant en outre, lorsqu'au moins deux premières demandes d'acquisition de données sont reçues pendant une durée prédéfinie, après l'acquisition de tous les identificateurs de données satisfaisant la condition de sélection de données en fonction de la condition de sélection de données :
la combinaison de tous les identificateurs de données satisfaisant les conditions de sélection de données de façon à obtenir des identificateurs de données combinés, ces identificateurs de données combinés ne comprenant pas d'identificateurs de données identiques ; et
l'acquisition simultanée de toutes les données correspondant aux identificateurs de données en fonction des identificateurs de données, et le renvoi des données acquises comprenant :
l'acquisition simultanée de toutes les données correspondant aux identificateurs de données combinés en fonction des identificateurs de données combinés, et le renvoi des données acquises.

5. Dispositif d'acquisition de données, comprenant :
un module de réception de demande d'acquisition de données (401), configuré de façon à recevoir au moins une première demande d'acquisition de données, cette première demande d'acquisition de données acheminant une condition de sélection de données ;
un module d'acquisition d'identificateurs de données (402), configuré de façon à acquérir tous les identificateurs de données satisfaisant la condition de sélection de données en interrogeant dans un rapport de mise en correspondance stocké localement entre des conditions de sélection de données et des identificateurs de données en fonction de la condition de sélection de données, ces identificateurs de données étant utilisés pour acquérir les données correspondant à eux et étant la position de stockage physique et la manière de lecture des données ; et
un premier module d'acquisition de données (403), configuré de façon à :
interroger si un rapport de mise en correspondance antémémorisé localement entre les identificateurs de données et les données comprend les données correspondant aux identificateurs de données et, si c'est le cas, acquérir les données correspondantes aux identificateurs de données ; sinon, générer au moins une deuxième demande d'acquisition de données en fonction des identificateurs de données et d'un format de paquet prédéfini, cette deuxième demande d'acquisition de données étant utilisée pour demander les données correspondant aux identificateurs de données, et acheminant une pluralité d'identificateurs de données, et le nombre total d'octets des identificateurs de données étant plus petit que le nombre maximum d'octets permis dans le format de paquet ou égal à celui-ci ; à envoyer l'au moins une deuxième demande d'acquisition de données à un serveur de stockage de données ; et à recevoir, du serveur de stockage de données, les données correspondant aux identificateurs de données en fonction des identificateurs de données.

6. Dispositif selon la revendication 5, comprenant en outre :
un module d'antémémorisation de données (404), configuré de façon à : juger si les données acquises satisfont une condition d'antémémorisation prédéfinie ; et, si c'est le cas, à générer un rapport de mise en correspondance entre les identificateurs de données et les données, et à antémémoriser le rapport de mise en correspondance dans le rapport de mise en correspondance antémorisé localement entre les identificateurs de données et les données.

7. Dispositif selon la revendication 6, comprenant en outre :
un module de définition de période de validité (406), configuré de façon à définir une période de validité pour le rapport de mise en correspondance entre les identificateurs de données et les données ; et
un module de gestion du rapport de mise en correspondance (407), configuré de façon à : si une durée pendant laquelle le rapport de mise en correspondance entre les identificateurs de données et les données est antémémorisé localement dépasse la période de validité, supprimer le rapport de mise en correspondance entre les identificateurs de données et les données du rapport de mise en correspondance antémémorisé localement entre les identificateurs de données et les données.

8. Dispositif selon la revendication 5, comprenant en outre :
un module de combinaison des identificateurs de données (408), configuré de façon à combiner tous les identificateurs de données satisfaisant les conditions de sélection de données de façon à obtenir des identificateurs de données combinés, ces identificateurs de données combinés ne comprenant pas d'identificateurs de données identiques ;
le premier module d'acquisition de données (403) étant configuré en outre de façon à : acquérir simultanément toutes les données correspondant aux identificateurs de données combinés en fonction des identificateurs de données combinés, et à renvoyer les données acquises.

9. Terminal, comprenant un dispositif d'acquisition de données selon l'une quelconque des revendications 5 à 8.

10. Système d'acquisition de données, comprenant un terminal selon la revendication 9 et un serveur de stockage de données qui comprend :
un module de réception, configuré de façon à recevoir une deuxième demande d'acquisition de données envoyée par un terminal, cette deuxième demande d'acquisition de données étant générée par le terminal en fonction des identificateurs de données et d'un format de paquet prédéfini ;
un module d'acquisition, configuré de façon à acquérir les données correspondant aux identificateurs de données en fonction des identificateurs de données ; et
un module de renvoi, configuré de façon à renvoyer les données correspondant aux identificateurs de données acquis par le module d'acquisition.

11. Système selon la revendication 10, dans lequel le module d'acquisition est configuré spécifiquement de façon à :
interroger dans un rapport de mise en correspondance entre les identificateurs de données et les données stocké sur le serveur de stockage de données de façon à acquérir des données correspondant à l'identificateur de données de la deuxième demande d'acquisition de données générée.
